# EUROPÄISCHE PATENTANMELDUNG

(11) **EP 1 008 295 A2**
(43) Veröffentlichungstag der Anmeldung: **14.06.2000**
(21) Anmeldenummer: 99122628.3
(22) Anmeldetag: 13.11.1999
(51) Int. Cl.: A01L 5/00, A01L 3/00, A01K 13/00

(54) **Hufschuh**

(30) Priorität: 03.12.1998 DE 29821595 U
(71) Anmelder: Marquis, Helmut, Dr., 89542 Herbrechtingen (DE)
(72) Erfinder: Marquis, Helmut, Dr., 89542 Herbrechtingen (DE)
(74) Vertreter: Lorenz, Werner, Dr.-Ing.

(57) **Zusammenfassung**

Ein Schuh (1), der über einen Huf eines Tieres, insbesondere eines Pferdes, stülpbar ist, weist wenigstens ein annähernd an den Huf angepaßtes Bodenteil (2) auf, an dem eine dem Huf des Tieres anzupassende Wandung (3) angeformt ist. Auf der Innenseite der Wandung (3) ist ein von der Wandung (3) wenigstens teilweise umgebenes, aus einem elastisch verformbaren Material bestehendes Element (11) vorgesehen, welches durch ein fluidisches Medium unter Druck setzbar ist.

## Beschreibung

Die Erfindung betrifft einen Schuh, der über einen Huf eines Tieres, insbesondere eines Pferdes, stülpbar ist, mit einem hufeisenförmigen Bodenteil, an dem eine dem Huf des Tieres anzupassende Wandung angeformt ist.

Ein gattungsgemäßer, dort als Pferdehufschuh bezeichneter Schuh ist aus der DE-GM 91 07 369 bekannt.

Dieser Schuh wird mit mehreren Bändern am Huf des Pferdes angebracht, was jedoch insbesondere beim Galopp den Nachteil mit sich bringt, daß die Bänder des Schuhs sich lockern und der gesamte Schuh somit verloren werden kann.

Die schon seit sehr langer Zeit verwendeten Hufeisen haben den Nachteil, daß sie mit Nägeln oder Schrauben am Huf des Pferdes befestigt werden müssen, wodurch der Huf beschädigt wird und Bakterien in denselben eindringen können. Aus diesem Grund können viele Pferde nicht beschlagen und somit nicht beritten werden. Ein weiterer Nachteil der bekannten Hufeisen ist, daß sie zwar im Gras oder auf Schotter relativ gute Hafteigenschaften besitzen, auf Asphalt jedoch häufig ein Rutschen des Pferdes bewirken. Außerdem bieten solche Hufeisen keine Dämpfung des Hufes, sondern verursachen im Gegenteil bei jeder Fußung eine unphysiologische Vibration, die sich schädlich auf die Hornkapsel des Tieres auswirkt.

Es ist daher Aufgabe der vorliegenden Erfindung, einen Schuh für den Huf eines Tieres, insbesondere eines Pferdes, zu schaffen, welcher einen zuverlässigen Schutz des Hufes bietet, bei sämtlichen Gangarten des Tieres sicher mit dem Huf des Tieres verbunden ist und darüber hinaus bei verschiedenen Bodenbeschaffenheiten einsetzbar ist.

Erfindungsgemäß wird diese Aufgabe dadurch gelöst, daß auf der Innenseite der Wandung ein von der Wandung wenigstens teilweise umgebenes, aus einem elastischen Material bestehendes Element vorgesehen ist, welches durch ein fluidisches Medium unter Druck setzbar ist.

Durch das erfindungsgemäße, den Huf umgebende Element, welches durch ein fluidisches Medium unter Druck setzbar ist, kann der Schuh in sehr vorteilhafter Art und Weise sehr gut an den Huf des Tieres angepaßt werden.

Hierdurch sitzt der Schuh in jeder Gangart des Tieres sicher am Huf und kann sich auch bei sehr starker Beanspruchung nicht lösen. Dabei ist stets sichergestellt, daß durch den Schuh kein Teil des Fußes mit einer zu hohen Kraft beansprucht und hierdurch verletzt werden könnte. Dies gilt insbesondere für das weiche Gewebe bzw. den Ballenbereich an der Rückseite des Fußes.

Gegenüber den gebräuchlichen Hufeisen ergibt sich der Vorteil, daß der erfindungsgemäße Schuh am Huf befestigt werden kann, ohne daß hierzu ein Eingriff am Huf notwendig ist. Des weiteren bietet der erfindungsgemäße Schuh auf den verschiedensten Bodenbelägen, insbesondere jedoch auch auf Asphalt, einen sehr guten Halt. Des weiteren ergibt sich durch den erfindungsgemäßen Schuh eine sehr gute Dämpfung bei jeder Gangart des Pferdes.

Der erfindungsgemäße Schuh kann auch aus medizinischen Gründen eingesetzt werden, nämlich wenn die Pferde Hufprobleme haben oder die Hornqualität schlecht ist. Der erfindungsgemäße Schuh kann nämlich vorteilhafterweise zu jeder Zeit abgenommen werden, wodurch das Pferd sich barhuf bewegen bzw. stehen kann. Der fehlende Bodenkontakt der Hufe bei ansonsten vorgesehenen Hufeisen oder sonstigen bekannten Hufschuhen, die permanent am Huf befestigt sein müssen, wird hierdurch vermieden und die Hornqualität durch den auf die bloßen Hufe ausgeübten, natürlichen Reiz des Untergrundes verbessert.

Wenn in einer besonders vorteilhaften Ausgestaltung der Erfindung das unter Druck setzbare Element im hinteren und seitlichen Bereich des Hufes an der Innenseite der Wandung vorgesehen ist, so ergibt sich ein sehr einfaches Einsteigen in den Schuh bzw. ein sehr einfaches Überziehen des Schuhs

Ein noch besserer Halt des erfindungsgemäßen Schuhs an dem Huf ist gewährleistet, wenn in einer weiteren vorteilhaften Ausgestaltung der Erfindung im vorderen Bereich des Hufes eine Lasche angeordnet ist, welche mit der Wandung verbunden ist.

Wenn in weiteren vorteilhaften Ausgestaltungen der Erfindung die Lasche über einen elastischen Steg und wenigstens ein Band mit der Wandung verbunden ist, so kann die Lasche durch Kippen um den elastischen Steg so geöffnet werden, daß ein Einsteigen in den Schuh erleichtert wird. Das wenigstens eine Band kann anschließend zur Befestigung der Lasche an der Wandung und somit zur Befestigung des Schuhs am Huf dienen.

Eine einfache Möglichkeit zur Aufnahme von Schweiß innerhalb des Schuhs kann gegeben sein, wenn das Bodenteil an seiner dem Huf zugewandten Seite mit Stegen und zwischen den Stegen sich befindlichen Ausnehmungen versehen ist. Des weiteren ergibt sich dadurch eine gute Belüftung der Hufsohle.

Um ein einfaches Handling beim Abnehmen und Anlegen des Schuhs zu ermöglichen, kann das unter Druck setzbare Element schlauchartig ausgebildet und mit einem Ventil versehen sein.

In einer vorteilhaften Weiterbildung der Erfindung kann das Bodenteil zweiteilig ausgebildet sein, wobei das dem Huf abgewandte Teil auswechselbar sein kann, und wobei an der dem Huf abgewandten Seite des Bodenteils Stollen anbringbar sind. Hierdurch ist der Schuh an die verschiedensten Geländeformen und -oberflächen anpaßbar. Des weiteren kann hierdurch das dem Verschleiß ausgesetzte, dem Huf abgewandte Teil bei entsprechender Abnutzung ausgewechselt werden. Durch die Stollen ergibt sich eine vorteilhafte Anpassung des Schuhs an sehr tiefes Geläuf.

Hierbei läßt sich eine einfache Montage des Bodenteils dadurch erreichen, daß die Stollen derart an dem dem Huf abgewandten Teil des Bodenteils anbringbar sind, daß durch die Stollen das dem Huf abgewandte Teil des Bodenteils an dem dem Huf zugewandten Teil des Bodenteils befestigbar ist.

Wenn in einer weiteren Ausgestaltung der Erfindung sich in dem dem Huf zugewandten Teil des Bodenteils Innengewinde befinden und die Stollen mit in die Innengewinde einschraubbaren Außengewinden versehen sind, so stellt dies eine einfache Möglichkeit zur Befestigung der Stollen an dem Bodenteil des Schuhs dar. Gleichzeitig werden hierdurch die beiden Einzelteile des Bodenteils miteinander verbunden, wodurch sich eine Doppelfunktion für die Stollen ergibt.

Um eine einfache Reparaturmöglichkeit für den Schuh zu erreichen, kann das unter Druck setzbare Element austauschbar sein.

Wenn die Wandung aus einem elastisch verformbaren Material besteht, kann eine noch bessere Anpassung des Schuhs an den Huf des Tieres erfolgen.

In einer weiteren vorteilhaften Ausgestaltung der Erfindung kann vorgesehen sein, daß an der Innenseite des Bodenteils und/oder der Innenseite der Wandung und/oder der Innenseite der Lasche eine Auflage angebracht ist. Als Material für diese Auflage kann Gel oder Hartschaum verwendet werden. Hierdurch ergibt sich vorteilhafterweise eine bessere Stoßdämpfung bei jeder Gangart des Pferdes und es werden Scheuerstellen vermieden.

Um eine noch bessere Schonung der Hufe des Pferdes zu erreichen, kann die aus Gel oder Hartschaum bestehende Auflage mit textilem Stoff bezogen sein.

Wenn an dem dem Huf abgewandten Teil des Bodenteils aus Hartmetall bestehende Stifte anbringbar sind, welche in Führungsbolzen gelagert sind, so ist in nassem Gras, auf Asphalt oder auf Eis ein besserer Halt für das Pferd gegeben.

Nachfolgend ist ein Ausführungsbeispiel der Erfindung prinzipmäßig dargestellt.

Es zeigt:
- Fig. 1: eine Seitenansicht einer ersten Ausführungsform des erfindungsgemäßen Schuhs;
- Fig. 2: eine Draufsicht auf den Schuh aus Fig. 1;
- Fig. 3: eine Seitenansicht einer zweiten Ausführungsform des erfindungsgemäßen Schuhs; und
- Fig. 4: eine Draufsicht auf den Schuh aus Fig. 3.

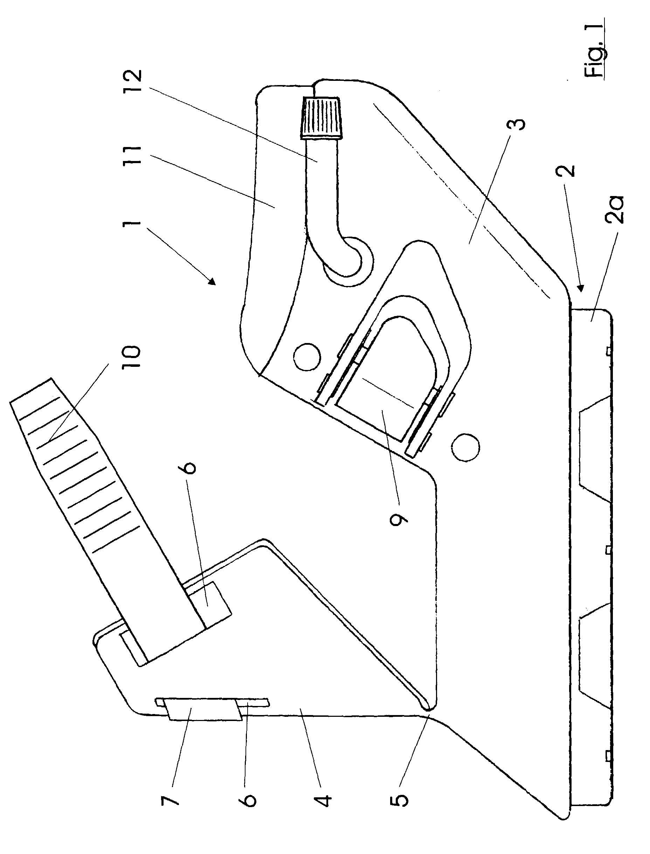

Fig. 1 zeigt einen Schuh 1, welcher dafür vorgesehen ist, über ein einen nicht dargestellten Huf eines Tieres, insbesondere eines Pferdes, gestülpt zu werden. Der Schuh 1 weist ein Bodenteil 2 sowie eine an dem Bodenteil 2 angeformte Wandung 3 aus einem elastisch verformbaren Material, z.B. Kunststoff, auf. Die Wandung 3 ist annähernd an den Huf des Pferdes angepaßt und weist an ihrer Vorderseite eine Lasche 4 auf, welche über einen elastischen, aus dem Material der Wandung bestehenden Steg 5 mit der Wandung 3 verbunden ist und nach vorne geklappt werden kann. Hierdurch wird ein Einsteigen in den Schuh 1 bzw. ein Anlegen des Schuhs 1 an dem Huf erleichtert.

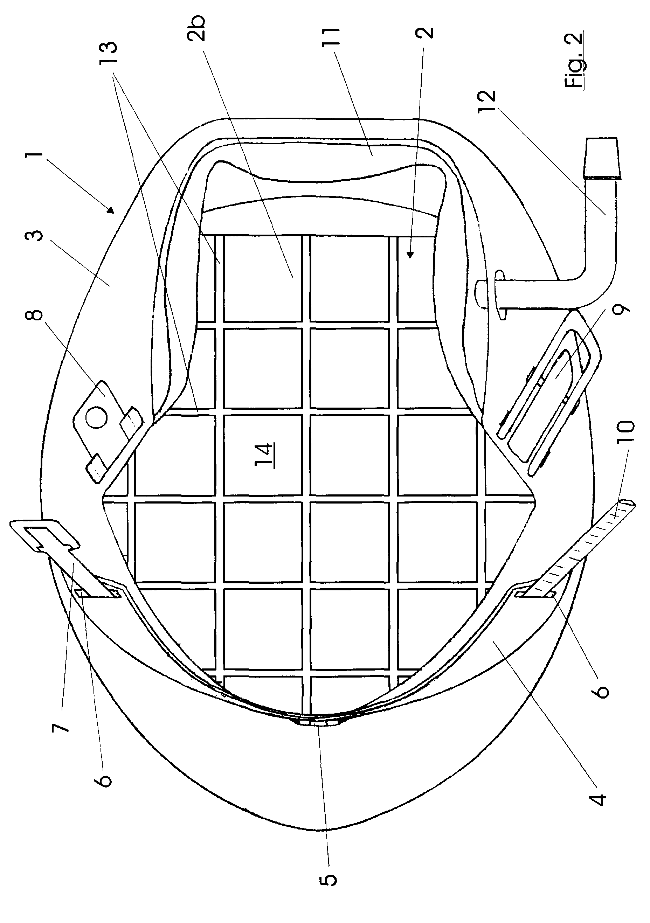

In der Lasche 4 befinden sich Öffnungen 6, durch welche ein Band 7 durchgezogen ist. Das Band 7 ist an einem seiner beiden Enden an einem an der Wandung 3 angebrachten Halteelement 8, welches in Fig. 2 dargestellt ist, befestigbar. An dem anderen Ende befindet sich an der Wandung 3 eine Schnalle 9, an welcher das Band 7, welches in diesem Bereich mit einer Rasterung 10 versehen ist, eingeschoben und anschließend die Schnalle 9 verschlossen werden kann. Auf diese Art und Weise kann die Lasche 4 über das Band 7 an der Wandung 3 befestigt und der Schuh 1 geschlossen werden. Selbstverständlich ist es hierbei auch möglich, zwei oder mehr Bänder 7 vorzusehen. Durch die Rasterung 10 ist in Verbindung mit der Schnalle 9 eine Einstellung des Schuhs 1 auf verschiedene Hufgrößen möglich. Außerdem kann zur Anpassung an verschiedene Hufe, gegebenenfalls auch verschiedener Tiere, auch ein insgesamt kleinerer Schuh 1 vorgesehen sein, dessen Wandung 3 kleiner ist.

Im hinteren und seitlichen Bereich befindet sich an der Innenseite der Wandung 3 ein von der Wandung 3 umgebenes Element 11, welches schlauchförmig ausgebildet ist und aus einem elastischen Material, im vorliegenden Fall aus Gummi, besteht. An dem schlauchförmigen Element 11 ist ein Ventil 12 angebracht, durch welches ein fluidisches Medium in das schlauchförmige Element 11 eingeleitet und dieses somit unter Druck gesetzt werden kann. Wenn sich der Huf in dem Schuh 1 befindet und die Lasche 4 wie oben beschrieben geschlossen wurde, kann durch Einleiten von fluidischem Medium, z.B. Druckluft, in das schlauchförmige Element 11 dieses vergrößert und somit an den Huf angepaßt werden.

Durch dieses Anschmiegen des Elements 11 an den Huf wird dieser in dem Schuh 1 festgehalten, wobei er im vorderen Bereich an der Lasche 4 und im hinteren und seitlichen Bereich an dem schlauchförmigen Element 11 anliegt. In nicht dargestellter Art und Weise ist hierbei die Lasche 4 an ihrer dem Huf zugewandten Seite mit einer Polsterung versehen. Die Verbindung zwischen dem Schuh 1 und dem Huf ist dabei so sicher und fest, daß bei Verwendung des Schuhs 1 bei Pferden derselbe auch bei den Gangarten Trab oder Galopp nicht verloren werden kann.

In einer nicht dargestellten Weiterbildung kann das Element 11 mit Noppen versehen sein, die ein planes Anliegen desselben an dem Huf verhindern und so das Atmen des Gewebes am Huf ermöglichen.

Das Bodenteil 2 ist zweiteilig mit einem unteren, dem Huf abgewandten Teil 2a und einem oberen, dem Huf zugewandten Teil 2b ausgebildet. Das dem Huf zugewandte Teil 2b bildet somit die Innenseite des Schuhs 1. Wie in Fig. 2 erkennbar, weist das dem Huf zugewandte Teil 2b des Bodenteils 2 mehrere in einer Ebene parallel zu dem Bodenteil vertikal und horizontal verlaufende Stege 13 sowie zwischen den Stegen 13 sich befindliche Ausnehmungen 14 auf. Dadurch ergibt sich eine verbesserte Lüftung der Hufsohle und eine Möglichkeit zur Schweißaufnahme. Das Bodenteil 2 gewährleistet durch die Elastizität des verwendeten Materials außerdem eine sehr gute Dämpfung für die Hufe und dadurch auch für die Gliedmaßen des Pferdes.

Das untere Teil 2a ist mit dem oberen Teil 2b durch nicht dargestellte Schrauben verbunden, welche in ebenfalls nicht dargestellte Innengewinde in dem oberen Teil 2b eingreifen. Selbstverständlich sind jedoch auch andere Verbindungsmöglichkeiten, wie z.B. bajonettartige Verschlüsse, Nieten oder eine Klebeverbindung denkbar. Für den Einsatz im Gelände oder bei tieferem Geläuf können statt der Schrauben auch Stollen (nicht dargestellt) eingeschraubt werden, welche mit einem Außengewinde versehen sind und in die Innengewinde des oberen Teils 2b eingeschraubt werden können. Die Stollen halten in diesem Fall das untere Teil 2a an dem oberen Teil 2b fest. Für den Einsatz auf Asphalt besteht das untere Teil 2a des Bodenteils 2 aus einem elastischen Material, wie Gummi oder Kunststoff.

Das schlauchförmige Element 11 kann ebenfalls ausgetauscht werden, wodurch der Schuh 1 bei Beschädigung des Elements 11 in einfacher Weise repariert werden kann. Zwar ist das schlauchförmige Element 11 über Nieten mit der Wandung 3 verbunden, diese können jedoch im Falle einer Reparatur entfernt werden und ein anderes Element 11 kann mit der Wandung 3 des Schuhs 12 neu vernietet werden.

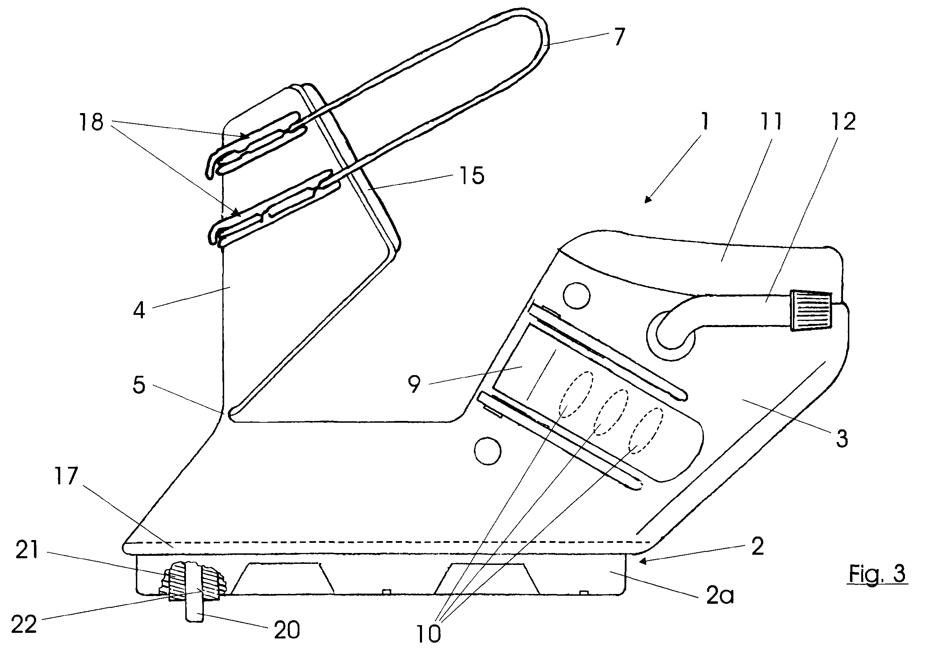

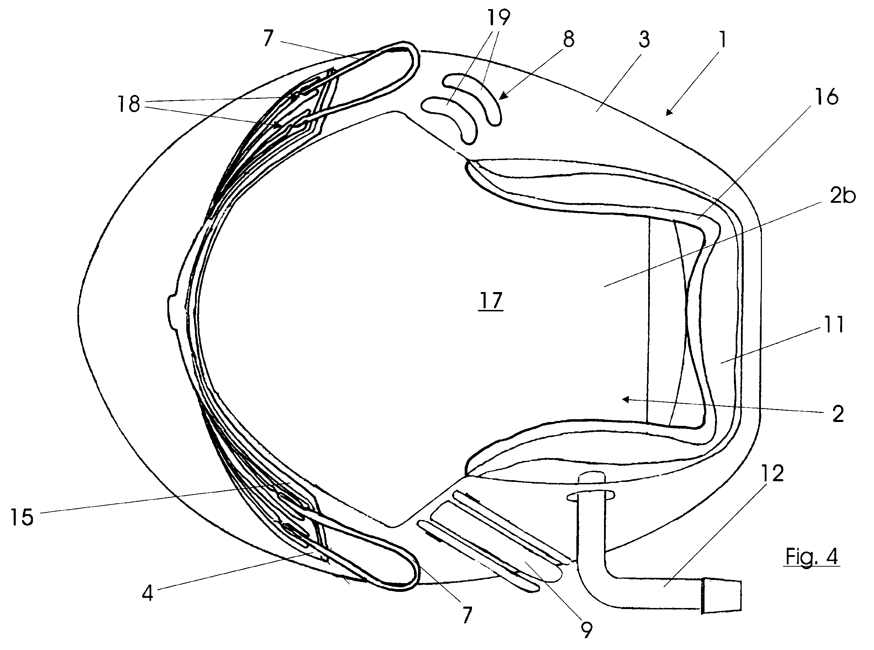

In Fig. 3 und Fig. 4 ist eine alternative Ausführungsform des Schuhs 1 dargestellt.

Dort ist die Lasche 4 an ihrer Innenseite mit einer Auflage 15 versehen, welche in diesem Fall aus Gel besteht. In Fig. 4 ist erkennbar, daß auch das schlauchförmige Element 11 an seiner Innenseite mit einer Auflage 16 aus Gel versehen ist. Beide Auflagen 15 und 16 sind dabei mit der Lasche 4 bzw. mit dem schlauchförmigen Element 11 verklebt. Des weiteren sind die Ausnehmungen 14 des Bodenteils 2 mit Gel ausgegossen, so daß auch hier eine Auflage 17 entsteht. Durch die Auflagen 15 und 16 werden Scheuerstellen am Huf verhindert, durch die Auflage 17 entsteht eine bessere Stoßdämpfung für den Huf des Pferdes und es tritt hierdurch zugleich während des Laufens eine gewisse Massagewirkung für den Hufstrahl ein.

Alternativ zu der beschriebenen Ausführungsform können die Auflagen 15, 16 und 17 auch aus Hartschaum bestehen. Im vorliegenden Fall sind sämtliche Auflagen 15, 16 und 17 mit einem textilen Stoff bezogen, der dieselben auf diese Weise vor Beschädigung schützt.

Aus Fig. 3 und 4 geht des weiteren hervor, daß das Halteelement 8, das Band 7, die Rasterung 10 sowie die Schnalle 9 gegenüber Fig. 1 und 2 abgeändert sind. Das Band 7 ist in der Form eines ringförmigen Drahtes ausgeführt und an der Lasche 4 in schlitzförmigen Befestigungsmitteln 18 eingeklipst. Die Rasterung 10 ist an der Schnalle 9 vorgesehen. Das Band 7 wird auf einer Seite an einem von im vorliegenden Fall zwei Haken 19 des Halteelements 8 eingehängt und auf der anderen Seite an der Rasterung 10 der Schnalle 9. Diese wird dann, ähnlich der Funktionsweise eines Skischuhs, geschlossen. Auch hierdurch ist eine Einstellung des Schuhs 1 auf verschiedene Hufgrößen möglich.

In Fig. 3 ist des weiteren zu erkennen, daß in dem unteren Teil 2a des Bodenteils 2 aus Hartmetall bestehende Stifte 20 eingebracht sind, welche in Führungsbolzen 21 gelagert sind. Die Führungsbolzen 21 sind beispielsweise in das untere Teil 2a eingeschraubt und weisen eine Bohrung 22 auf, in welche die Stifte 20 eingeschoben werden. In nicht dargestellter Weise greift dann ein innerhalb der Bohrung 22 des Führungsbolzens 21 sich befindlicher Widerhaken in eine Nut des Stiftes 20 ein und hält denselben in dem Führungsbolzen 21. Durch die Stifte 20 ergibt sich für das Pferd eine bessere Haftung, beispielsweise auf nassem Grasboden, auf Asphalt oder auf Eis, wobei dadurch, daß die Stifte 20 aus Hartmetall bestehen, eine sehr hohe Verschleißbeständigkeit derselben gegeben ist.

Wie im Falle der oben beschriebenen Stollen könnten auch die Führungsbolzen 21 das untere Teil 2a mit dem oberen Teil 2b verschrauben. Auf diese Weise könnte einem Benutzer auch die Alternative zwischen Stollen und Stiften 20 gegeben werden. Selbstverständlich sind auch sowohl Stollen als auch Stifte 20 denkbar.

## Patentansprüche

1. Schuh, der über einen Huf eines Tieres, insbesondere eines Pferdes, stülpbar ist, mit einem wenigstens annähernd an den Huf angepaßten Bodenteil, an dem eine dem Huf des Tieres anzupassende Wandung angeformt ist,
**dadurch gekennzeichnet,** daß
auf der Innenseite der Wandung (3) ein von der Wandung (3) wenigstens teilweise umgebenes, aus einem elastisch verformbaren Material bestehendes Element (11) vorgesehen ist, welches durch ein fluidisches Medium unter Druck setzbar ist.

2. Schuh nach Anspruch 1,
**dadurch gekennzeichnet,** daß
das unter Druck setzbare Element (11) im hinteren und seitlichen Bereich des Hufes an der Innenseite der Wandung (3) vorgesehen ist.

3. Schuh nach Anspruch 1 oder 2,
**dadurch gekennzeichnet,** daß
im vorderen Bereich des Hufes eine Lasche (4) angeordnet ist, welche mit der Wandung (3) verbunden ist.

4. Schuh nach Anspruch 3,
**dadurch gekennzeichnet,** daß
die Lasche (4) über einen elastischen Steg (5) mit der Wandung (3) verbunden ist.

5. Schuh nach Anspruch 3 oder 4,
**dadurch gekennzeichnet,** daß
die Lasche (4) durch wenigstens ein Band (7) mit der Wandung (3) verbunden ist, wobei das Band (7) über ein Halteelement (8) und eine Schnalle (9) mit der Wandung (3) verbunden ist.

6. Schuh nach einem der Ansprüche 1 bis 5,
**dadurch gekennzeichnet,** daß
das unter Druck setzbare Element (11) schlauchartig ausgebildet und mit einem Ventil (12) versehen ist.

7. Schuh nach einem der Ansprüche 1 bis 6,
**dadurch gekennzeichnet,** daß
das Bodenteil (2) an seiner dem Huf zugewandten Seite mit Stegen (13) und zwischen den Stegen (13) sich befindlichen Ausnehmungen (14) versehen ist.

8. Schuh nach einem der Ansprüche 1 bis 7,
**dadurch gekennzeichnet,** daß
das Bodenteil (2) zweiteilig ausgebildet ist, wobei das dem Huf abgewandte Teil (2a) auswechselbar ist, wobei an dem dem Huf abgewandten Teil (2a) des Bodenteils (2) Stollen anbringbar sind.

9. Schuh nach Anspruch 8,
**dadurch gekennzeichnet,** daß
die Stollen derart an dem dem Huf abgewandten Teil des Bodenteils (2a) anbringbar sind, daß durch die Stollen das dem Huf abgewandte Teil des Bodenteils (2a) an dem dem Huf zugewandten Teil des Bodenteils (2b) befestigbar ist, wobei sich in dem dem Huf zugewandten Teil (2b) des Bodenteils (2) Innengewinde befinden, und daß die Stollen mit in die Innengewinde einschraubbaren Außengewinden versehen sind.

10. Schuh nach einem der Ansprüche 1 bis 9,
**dadurch gekennzeichnet,** daß
das unter Druck setzbare Element (11) austauschbar ist.

11. Schuh nach einem der Ansprüche 1 bis 10,
**dadurch gekennzeichnet,** daß
die Wandung (3) aus einem elastisch verformbaren Material besteht.

12. Schuh nach einem der Ansprüche 1 bis 11,
**dadurch gekennzeichnet,** daß
an der Innenseite des Bodenteils (2) und/oder der Innenseite der Wandung (3) und/oder der Innenseite der Lasche (4) eine Auflage (15,16,17) angebracht ist.

13. Schuh nach Anspruch 12,
**dadurch gekennzeichnet,** daß
die Auflage (15,16,17) ein Gel und/oder einen Hartschaum aufweist und mit einem textilen Stoff bezogen ist.

14. Schuh nach einem der Ansprüche 1 bis 13,
**dadurch gekennzeichnet,** daß
an dem dem Huf abgewandten Teil (2a) des Bodenteils (2) aus Hartmetall bestehende Stifte (20) anbringbar sind, welche in Führungsbolzen (21) gelagert sind.
